# EUROPÄISCHE PATENTSCHRIFT

(11) **EP 3 034 348 B1**
(45) Veröffentlichungstag und Bekanntmachung des Hinweises auf die Patenterteilung: **05.06.2019**
(21) Anmeldenummer: 14199343.6
(22) Anmeldetag: 19.12.2014
(51) Int. Cl.: B60K 17/346, F16H 48/22

(54) **Verteilergetriebe zum Aufteilen eines Drehmoments auf wenigstens eine erste und eine zweite Achswelle eines Kraftfahrzeugs**
Distributor gear for dividing a torque to at least a first and a second axle shaft of a motor vehicle
Boîte de transfert destinée à répartir un couple sur au moins un premier et un second arbre primaire d'un véhicule automobile

(43) Veröffentlichungstag der Anmeldung: 22.06.2016
(73) Patentinhaber: NAF Neunkirchener Achsenfabrik AG, 91077 Neunkirchen (DE)
(72) Erfinder: Eyring, Alexander, 80687 München (DE); Schnabel, Bernhard, 82319 Starnberg (DE); Stadler, Jürgen, 80995 München (DE)
(74) Vertreter: Hofstetter, Schurack & Partner

(56) Entgegenhaltungen:
- AT-B- 302 823
- DE-A1- 2 135 791

## Beschreibung

Die Erfindung betrifft ein Verteilergetriebe zum Aufteilen eines Drehmoments auf wenigstens eine erste und eine zweite Achswelle eines Kraftfahrzeugs. Die Erfindung betrifft weiterhin ein Kraftfahrzeug mit einem derartigen Verteilergetriebe.

Zwei- oder mehrachsige Fahrzeuge wie beispielsweise selbstfahrende Arbeitsmaschinen mit oder ohne Knicklenkung besitzen insbesondere bei Kurvenfahrt unterschiedliche Drehzahlen an den einzelnen Vorder- und Hinterrädern. Bei einem starren Allradantrieb ohne weitere Ausgleichsmaßnahmen führen diese unterschiedlichen Drehzahlen zu Verspannungen im Antriebsstrang, die unerwünschte Verlustleistung in Form von Erwärmungen, erhöhter Reifenabnutzung und erhöhtem Kraftstoffverbrauch hervorrufen oder sogar zur Schädigung der Antriebskomponenten führen können.

Aus der AT 302 823 B ist ein Verteilergetriebe für Kraftfahrzeuge mit Hinter- und Vorderachsantrieb bekannt, das ein zweigängiges Stirnradgetriebe umfasst, wobei eines der auf einer Vorlegewelle des Stirnradgetriebes sitzenden Zahnräder den Steg eines als Stirnradplanetengetriebe ausgebildeten sperrbaren Ausgleichgetriebes antreibt, von dessen Außenrad der Hinterachsantrieb und von dessen Sonnenrad der Vorderachsantrieb abgeleitet sind.

Herkömmliche selbstfahrende Arbeitsmaschinen weisen daher eine Allradabschaltung auf, mit der die Hinterachse vom Antrieb abgekoppelt werden kann. Dabei wird insbesondere bei Straßenfahrt mit griffigem Untergrund die Hinterachse vom Antrieb getrennt, um Verspannungen zu vermeiden. Die Abkopplung erfolgt in der Regel mit Hilfe einer Klauenkupplung, die im Verteilergetriebe geöffnet oder geschlossen wird. Bei Geländefahrten bzw. bei weichem oder unregelmäßigem Untergrund wird die Klauenkupplung geschlossen, so dass das Drehmoment des Motors auf die Vorder- und die Hinterachse übertragen wird. Etwaige Verspannungen werden bei niedrigen Geschwindigkeiten in Kauf genommen, so dass derartige Kraftfahrzeuge vor allem im Gelände permanent mit starrer Verbindung von Vorder- zu Hinterachse bewegt werden.

In dieser Konfiguration kann aber im Extremfall das gesamte Antriebsmoment auf die Hinter- oder auf die Vorderachse gelenkt werden, wenn die jeweils andere Achse die Bodenhaftung verliert. Typische Situationen sind sogenannte "µ-Split-Strecken", bei denen benachbarte Oberflächenbereiche stark unterschiedliche Reibwerte aufweisen (Asphalt/Eis, Asphalt/Schotter, Asphalt/Gras etc.) sowie die Überfahrt von Bäumen, Steinen oder anderen Hindernissen. Aber auch bei Geländefahrt auf weichem Boden ruft eine starre Verbindung von Vorder- und Hinterachse Verspannungen und Verlustleistungen hervor, was eine entsprechend stark dimensionierte Auslegung der Achsgetriebe erfordert und den Treibstoffverbrauch erhöht.

Aufgabe der vorliegenden Erfindung ist es, ein Verteilergetriebe zu schaffen, welches eine verbesserte Aufteilung eines Drehmoments auf wenigstens eine erste und eine zweite Achswelle eines Kraftfahrzeugs ermöglicht. Eine weitere Aufgabe der vorliegenden Erfindung besteht darin, ein Kraftfahrzeug mit einem derartigen Verteilergetriebe anzugeben.

Die Aufgaben werden erfindungsgemäß durch ein Verteilergetriebe mit den Merkmalen des Patentanspruchs 1 sowie durch ein Kraftfahrzeug gemäß Patentanspruch 13 mit einem derartigen Verteilergetriebe gelöst. Vorteilhafte Ausgestaltungen der Erfindung sind in den Unteransprüchen angegeben, wobei vorteilhafte Ausgestaltungen des Verteilergetriebes als vorteilhafte Ausgestaltungen des Kraftfahrzeugs anzusehen sind.

Ein erster Aspekt der Erfindung betrifft ein Verteilergetriebe zum Aufteilen eines Drehmoments auf wenigstens eine erste und eine zweite Achswelle eines Kraftfahrzeugs. Erfindungsgemäß wird die Aufteilung des Drehmoments dadurch verbessert, dass das Verteilergetriebe zumindest eine Eingangswelle, welche mit einem Motor, insbesondere einem Hydromotor, des Kraftfahrzeugs koppelbar ist, mindestens ein erstes Gangrad, das zum Übertragen eines Drehmoments mit der Eingangswelle drehbewegungsverbunden ist, zumindest ein weiteres Gangrad, das zum Übertragen eines Drehmoments mit der Eingangswelle drehbewegungsverbunden ist, eine Hohlwelle, durch welche die erste Achswelle hindurch geführt ist, ein Differentialgetriebe, mittels welchem ein Drehmoment zwischen der ersten Achswelle, der Hohlwelle und der zweiten Achswelle aufteilbar ist, eine Differentialsperre, welche zwischen einem Sperrzustand, in dem mindestens das erste Gangrad mit der ersten Achswelle drehbewegungsverbunden ist, und einem Offenzustand, in dem mindestens das erste Gangrad von der ersten Achswelle drehbewegungsentkoppelt ist, schaltbar ist, sowie eine Schalteinrichtung, mittels welcher in einem ersten Gang das erste Gangrad mit der Hohlwelle drehbewegungsverbindbar und das zumindest eine weitere Gangrad von der Hohlwelle drehbewegungsentkoppelbar ist und mittels welcher in einem zweiten Gang das erste Gangrad von der Hohlwelle drehbewegungsentkoppelbar und das zumindest eine weitere Gangrad mit der Hohlwelle drehbewegungsverbindbar ist, umfasst oder aus den genannten Elementen besteht. Mit anderen Worten umfasst das erfindungsgemäße Verteilergetriebe eine Schalteinrichtung, ein Differentialgetriebe und eine Differentialsperre, die in unterschiedliche Zustände schaltbar ist. Das Differentialgetriebe ermöglicht damit eine Aufteilung des vom Motor gelieferten Drehmoments zwischen der ersten und der zweiten Achswelle, während die Differentialsperre automatisiert oder manuell die erste Achswelle mit dem ersten Gangrad verbinden kann, wenn wenigstens ein mit einer der Achswellen verbundenes Rad durchdreht oder kurz davor ist durchzudrehen, beispielsweise bei beginnendem Schlupf. Das erfindungsgemäße Verteilergetriebe erlaubt damit die vollständige Verhinderung von Verspannungen zwischen der ersten und der zweiten Achswelle sowie zwischen den einzelnen Rädern eines zugeordneten Kraftfahrzeugs und erlaubt eine definierte Aufteilung des von einem angeschlossenen Motor gelieferten Drehmoments auf die erste und die zweite Achswelle, beispielsweise auf eine Vorder- und eine Hinterachse einer selbstfahrenden Arbeitsmaschine. Somit können diese Komponenten kleiner dimensioniert werden, wodurch neben einer Kraftstoff- bzw. Energieverbrauchsreduzierung entsprechende Bauraum- und Gewichtseinsparungen bei dem zugeordneten Kraftfahrzeug realisierbar sind. Weitere Gewichts- und Bauraumeinsparungen werden erzielt, indem die erste Achswelle durch die Hohlwelle geführt ist. Daher kann das erfindungsgemäße Verteilergetriebe sehr kompakt ausgebildet werden. Durch das zumindest eine weitere Gangrad, das zum Übertragen eines Drehmoments mit der Eingangswelle drehbewegungsverbunden ist, können zwei, drei oder mehr Vorwärts- und/oder Rückwärtsgänge zur Verfügung gestellt werden, um das Kraftfahrzeug in wenigstens zwei unterschiedlichen Geschwindigkeitsbereichen bewegen zu können. Die Schalteinrichtung ermöglicht eine einfache Auswahl des dem betreffenden Gangrad zugeordneten Übersetzungsverhältnisses.

In einer vorteilhaften Ausgestaltung der Erfindung ist vorgesehen, dass das erste Gangrad und/oder das wenigstens eine weitere Gangrad zum Übertragen eines Drehmoments über wenigstens eine Zwischenwelle mit der Eingangswelle drehbewegungsverbunden ist. Dies erlaubt eine Anpassung des Abstands zwischen der Eingangswelle und dem betreffenden Gangrad sowie eine einfache Anpassung von jeweils gewünschten Übersetzungsverhältnissen. Dabei können grundsätzlich auch zwei oder mehr Zwischenwellen vorgesehen sein.

In einer weiteren vorteilhaften Ausgestaltung der Erfindung sind die erste Achswelle, die zweite Achswelle und die Hohlwelle koaxial angeordnet. Hierdurch kann das erfindungsgemäße Verteilergetriebe besonders kompakt ausgebildet werden.

Indem das Differentialgetriebe als Planetendifferenzial ausgebildet ist, kann auf besonders einfache und kompakte Weise eine unterschiedliche Drehmomentaufteilung zwischen der ersten und der zweiten Achswelle erzielt werden (z. B. eine 1:2 Aufteilung). Grundsätzlich könnte das Differentialgetriebe zwar auch als Kegel-, Stirn- oder Schraubenraddifferential ausgebildet sein, jedoch ist bei diesen Bauarten normalerweise nur eine Aufteilung in gleiche Drehmomente möglich (1:1-Aufteilung).

In einer weiteren vorteilhaften Ausgestaltung der Erfindung ist vorgesehen, dass die erste Achswelle mit einem Sonnenrad, die Hohlwelle mit Planeten und die zweite Achswelle mit einem Hohlrad des Differentialgetriebes drehbewegungsverbunden sind. Üblicherweise wird ein Planetendifferential gesperrt, indem zwei drehende Komponenten des Planetengetriebes, beispielsweise das Sonnenrad und die Planeten bzw. der Steg miteinander verbunden werden. Im Rahmen der vorliegenden Erfindung ist es jedoch vorgesehen, dass das Sonnenrad nicht unmittelbar mit den Planeten bzw. dem Steg verbunden wird. Vielmehr ist die erste Achswelle über die Differentialsperre bedarfsweise mit dem ersten Gangrad verbindbar. Nur wenn das erste Gangrad mit der Hohlwelle verbunden ist, das heißt wenn der erste Gang eingelegt ist, besteht auch eine Verbindung zwischen Sonnenrad und Planeten des Differentialgetriebes. Damit funktioniert die Differentialsperre im ersten Gang. Zum Bewegen des Kraftfahrzeugs in einem grundsätzlich optionalen weiteren Gang muss die Differentialsperre aber gelöst werden. Verbleibt die Differentialsperre im zweiten, dritten, vierten etc. Gang dennoch (versehentlich) geschlossen, so bleibt das Kraftfahrzeug stehen, weil dann das erste und das weitere Gangrad fest miteinander verbunden werden. In dieser Situation sind quasi der erste Gang und der weitere Gang gleichzeitig eingelegt. Dies sorgt auch ohne zusätzlichen Steuerungsaufwand einer Fahrzeugsteuerung vorteilhafter Weise dafür, dass schädliche Verspannungen im Antriebsstrang beispielsweise durch schnelle Straßenfahrt in einem zweiten oder höheren Gang zuverlässig vermieden werden.

In einer weiteren vorteilhaften Ausgestaltung der Erfindung ist vorgesehen, dass die Hohlwelle einenends über wenigstens einen Steg eines Planetenträgers der Planeten des Planetendifferenzials an einem Gehäuse des Verteilergetriebes gelagert ist. Dies erlaubt eine gleichzeitige Lagerung der Hohlwelle und des Planetendifferenzials, wodurch neben einer besonders kompakten Bauform auch eine vorteilhafte Selbstzentrierung des Planetendifferenzials und der Hohlwelle erreicht wird.

In einer weiteren vorteilhaften Ausgestaltung der Erfindung ist die Hohlwelle anderenends über das erste Gangrad am Gehäuse des Verteilergetriebes gelagert. Dies ermöglicht eine sehr kompakte Bauform des Verteilergetriebes und eine betriebssichere Abstützung der Lagerkräfte.

Weitere Vorteile ergeben sich, indem die Differentialsperre eine Lamellenkupplung umfasst, welche im Sperrzustand das erste Gangrad mit der ersten Achswelle drehbewegungsverbindet und im Offenzustand das erste Gangrad von der ersten Achswelle drehbewegungsentkoppelt. Mit Hilfe einer solchen Lamellenkupplung kann die Differentialsperre vorteilhaft auch bei bewegtem Kraftfahrzeug bzw. unter Last zwischen dem Sperrzustand und dem Offenzustand geschaltet werden. Darüber hinaus ist durch Variierung der Anzahl und Reibfläche der einzelnen Reibbeläge eine einfache Anpassbarkeit an unterschiedliche Anforderungsprofile und Bauformen des Verteilergetriebes ermöglicht. Aufgrund der Ausgestaltung des erfindungsgemäßen Verteilergetriebes kann die Lamellenkupplung zudem als Betriebs- und Parkbremse verwendet werden, wenn der optionale zweite oder höhere Gang eingelegt und die Differentialsperre geschlossen ist. Damit sind ein gezieltes Blockieren der Verteilergetriebes und eine Entlastung der Betriebsbremse des zugeordneten Kraftfahrzeugs im Stillstand möglich.

In einer weiteren vorteilhaften Ausgestaltung der Erfindung ist vorgesehen, dass die Differentialsperre in einem Teilgehäuse angeordnet ist, wobei das Teilgehäuse vorzugsweise lösbar mit dem Gehäuse des Verteilergetriebes verbunden ist. Hierdurch wird ein modularer Aufbau des Verteilergetriebes erreicht, so dass das Verteilergetriebe durch Verwendung unterschiedlicher Differentialsperren besonders einfach an unterschiedliche Fahrzeugtypen und Anforderungsprofile angepasst werden kann.

Weitere Vorteile ergeben sich, indem ein Lamellenträger der Lamellenkupplung vermittels wenigstens eines Lagerelements am Gehäuse des Verteilergetriebes und/oder am Teilgehäuse der Differentialsperre drehbar gelagert. Hierdurch können gezielt Lagerelemente verwendet werden, die entweder für hohe Drehzahlen oder für die Übertragung hoher Drehmomente ausgelegt sind. Neben Kostensenkungen sind hierdurch auch entsprechende Bauraumeinsparungen ermöglicht, da für das jeweilige Einsatzszenario optimierte Lagerelemente verwendet werden können. Alternativ oder zusätzlich kann vorgesehen sein, dass der Lamellenträger der Lamellenkupplung am ersten Gangrad abgestützt ist, wodurch ebenfalls eine Bauraumeinsparung bei gleichzeitig betriebssicherer Abstützung des Lamellenträgers gegeben ist.

In einer weiteren vorteilhaften Ausgestaltung der Erfindung ist wenigstens ein Drehzahlsensor vorgesehen, mittels welchem eine Drehzahl der ersten Achswelle und/oder der zweiten Achswelle und/oder der Eingangswelle ermittelbar ist. Dies ermöglicht gegebenenfalls unter Berücksichtigung von zusätzlichen Betriebsparametern weiterer Fahrzeugkomponenten eine einfache Prüfung, ob an einer der betreffenden Wellen eine unzulässige oder unerwartete Drehzahl bzw. Drehzahldifferenz auftritt. Im Fall einer unzulässigen Drehzahl bzw. Drehzahldifferenz kann dann bei manueller Betätigbarkeit ein optischer, akustischer oder haptischer Hinweis an den Fahrer zum Sperren der Differentialsperre ausgegeben werden. Im Fall einer automatisierten Differentialsperre kann diese beispielsweise aktuatorisch betätig und zwischen dem Sperr- und dem Offenzustand geschaltet werden.

Weitere Vorteile ergeben sich, wenn eine Steuereinrichtung vorgesehen ist, mittels welcher die Differentialsperre in Abhängigkeit eines Fahrzustands des zugeordneten Kraftfahrzeugs schaltbar ist. Dies ermöglicht ein fahrsituationsabhängiges automatisiertes oder halbautomatisiertes Schalten der Differentialsperre zwischen dem Sperr- und dem Offenzustand.

Ein zweiter Aspekt der Erfindung betrifft ein Kraftfahrzeug, insbesondere eine selbstfahrende Arbeitmaschine, mit wenigstens einer ersten und einer zweiten Achswelle, wobei eine verbesserte Aufteilung eines Drehmoments eines Motors des Kraftfahrzeugs wenigstens auf die erste und die zweite Achswelle erfindungsgemäß dadurch ermöglicht ist, dass das Kraftfahrzeug zumindest ein Verteilergetriebe nach einem der vorhergehenden Ausführungsbeispiele zum Aufteilen eines Drehmoments auf die erste und die zweite Achswelle umfasst. Das Kraftfahrzeug kann beispielsweise eine landgebundene, selbstfahrende Arbeitsmaschine mit oder ohne Knicklenkung sein und einen oder mehrere Motore aus der Gruppe der Brennkraftmaschinen, Hydromotoren und Elektromotoren zum Bereitstellen des aufzuteilenden Drehmoments aufweisen, die mit der Eingangswelle des Verteilergetriebes gekoppelt sind. Weitere Merkmale und deren Vorteile sind den Beschreibungen des ersten Erfindungsaspekts zu entnehmen, wobei vorteilhafte Ausgestaltungen des ersten Erfindungsaspekts als vorteilhafte Ausgestaltungen des zweiten Erfindungsaspekts anzusehen sind.

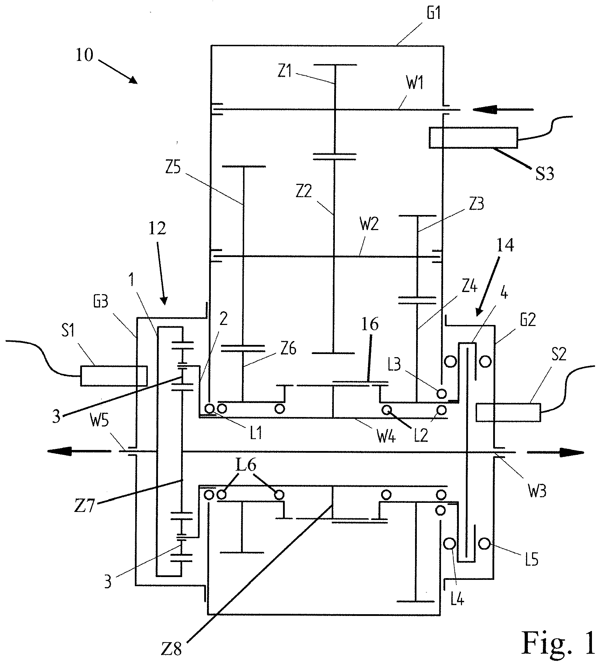

Weitere Merkmale der Erfindung ergeben sich aus den Ansprüchen, dem Ausführungsbeispiel sowie anhand der Zeichnung. Die vorstehend in der Beschreibung genannten Merkmale und Merkmalskombinationen sowie die nachfolgend in dem Ausführungsbeispiel genannten Merkmale und Merkmalskombinationen sind nicht nur in der jeweils angegebenen Kombination, sondern auch in anderen Kombinationen verwendbar, ohne den Rahmen der Erfindung zu verlassen. Dabei zeigt die einzige Figur eine Prinzipdarstellung eines Ausführungsbeispiels eines erfindungsgemäßen Verteilergetriebes.

Die einzige Figur zeigt eine Prinzipdarstellung eines Ausführungsbeispiels eines erfindungsgemäßen Verteilergetriebes 10. Das Verteilergetriebe 10 dient zum Aufteilen eines Drehmoments auf wenigstens eine erste Achswelle W3 und eine zweite Achswelle W5 eines zugeordneten Kraftfahrzeugs (nicht gezeigt). Das Kraftfahrzeug kann beispielsweise als landgebundene, selbstfahrende Arbeitsmaschine ausgebildet sein und einen Motor, beispielsweise eine Brennkraftmaschine, einen Hydromotor und/oder einen Elektromotor, aufweisen. Der Motor ist mit der Eingangswelle W1 des Verteilergetriebes 10 gekoppelt. Die Eingangswelle W1 umfasst ein Zahnrad Z1, das mit einem Zahnrad Z2 kämmt, welches zusammen mit den Zahnrädern Z3 und Z5 auf einer Zwischenwelle W2 angeordnet ist. Das Zahnrad Z3 kämmt seinerseits mit einem ersten Gangrad Z4, das zum Übertragen eines Drehmoments des Motors über die Zahnräder Z3, Z2 und Z1 mit der Eingangswelle W1 drehbewegungsverbunden ist. Das erste Gangrad Z4 ist über Lagerelemente L2, die beispielsweise als Nadellager ausgebildet sein können, an einer Hohlwelle W4 gelagert. Analog ist ein zweites Gangrad Z6, das über die Zahnräder Z5, Z2 und Z1 mit der Eingangswelle W1 drehbewegungsverbunden ist, über Lagerelemente L6, die ebenfalls als Nadellager ausgebildet sein können, an der Hohlwelle W4 gelagert. Die Hohlwelle W4 ist einenends über das erste Gangrad Z4 und das Lagerelement L3 an einem Gehäuse G1 des Verteilergetriebes 10 gelagert. Durch die Hohlwelle W4 ist die erste Achswelle W3 hindurch geführt, mit der eine Vorderachse des Fahrzeugs antreibbar ist. Über eine zweite Achswelle W5 ist eine Hinterachse des Fahrzeugs antreibbar. Man erkennt, dass die erste Achswelle W3, die zweite Achswelle W5 und die Hohlwelle W4 koaxial angeordnet sind.

Weiterhin umfasst das Verteilergetriebe 10 ein Differentialgetriebe 12, das vorliegend als Längsdifferential in Planetenbauweise bzw. als Planetendifferenzial ausgebildet ist und mittels welchem ein Drehmoment zwischen der ersten Achswelle W3, der Hohlwelle W4 und der zweiten Achswelle W5 aufteilbar ist. Es ist aber zu betonen, dass das Differentialgetriebe 12 auch andere Bauformen aufweisen kann und beispielsweise als Kegelrad-Differential ausgebildet sein kann.

Das Differentialgetriebe 12 weist im vorliegenden Ausführungsbeispiel ein Sonnenrad Z7 auf, welches mit der ersten Achswelle W3 drehbewegungsverbunden ist. Die Hohlwelle W4 ist über den Steg eines Planetenträgers 2 mit Planeten, die jeweils mit dem Bezugszeichen 3 gekennzeichnet sind, drehbewegungsverbunden. Über den Steg des Planetenträgers 2 ist die Hohlwelle W4 zudem über das Lagerelement L1 am Gehäuse G1 des Verteilergetriebes 10 gelagert. Die zweite Achswelle W5 ist schließlich mit einem Hohlrad 1 des Differentialgetriebes 12 drehbewegungsverbunden.

Das Differentialgetriebe 12 verhindert einerseits Verspannungen zwischen der ersten Achswelle W3 und der zweiten Achswelle W5 und erlaubt andererseits eine definierte Aufteilung der Antriebsmomente auf Vorder- und Hinterachse (z.B. 1:2) des Kraftfahrzeugs. Somit können diese Komponenten gegebenenfalls kleiner dimensioniert werden, wodurch Gewichts- und Bauraumeinsparungen realisierbar sind. Je nach Ausführung kann das Differentialgetriebe 12 in manchen Ausgestaltungen vom Fahrer vorausschauend manuell betätigt werden. Dies ist beispielsweise bei Muldenkippern von Vorteil, bei denen der Fahrer das Differentialgetriebe 12 sperrt, bevor er durch ein Schlammloch oder Ähnliches fährt. Alternativ oder zusätzlich kann auch eine automatische Betätigung des Differentialgetriebes 12 vorgesehen sein, beispielsweise in den niedrigsten Gängen, die üblicherweise ohnehin nur in schwerem Gelände verwendet werden.

Dem als Längsdifferential ausgebildeten Differentialgetriebe 12 ist eine Differentialsperre 14 zugeordnet, um gewährleisten zu können, dass weiterhin Drehmoment auf alle anderen Räder des Kraftfahrzeugs übertragen werden kann, wenn ein Rad bzw. eine Achsseite durchdreht oder beginnenden Schlupf zeigt. Die Differentialsperre 14 ist dabei auf einer dem Differentialgetriebe 12 gegenüberliegenden Seite des Verteilergetriebes 10 angeordnet und in einem Teilgehäuse G2 angeordnet, das lösbar mit dem Gehäuse G1 des Verteilergetriebes 10 verbunden ist. Diese Anordnung der Differentialsperre 14 zur Vorderachse W3 hin ermöglicht eine modulare Bauweise des Verteilergetriebes 10, da das Teilgehäuse G2 bedarfsweise gegen andere Funktionen oder Bauformen der Differentialsperre 14 austauschbar ist. Darüber hinaus kann das Verteilergetriebe 10 auf diese Weise ohne Längenzuwachs auf der Seite der zweiten Achswelle W5 gebaut werden, wodurch es auch als Nachrüstlösung für bereits bestehende Verteilergetriebe verwendet werden kann.

Die Differentialsperre 14 kann zwischen einem Sperrzustand, in dem mindestens das erste Gangrad Z4 mit der ersten Achswelle W3 drehbewegungsverbunden ist, und einem Offenzustand, in dem das erste Gangrad Z4 von der ersten Achswelle W3 drehbewegungsentkoppelt ist, geschaltet werden. Hierzu weist die Differentialsperre 14 eine Lamellenkupplung 4 auf, welche im Sperrzustand das erste Gangrad Z4 mit der ersten Achswelle W3 drehbewegungsverbindet und im Offenzustand das erste Gangrad Z4 von der ersten Achswelle drehbewegungsentkoppelt. Ein Lamellenträger der Lamellenkupplung 4 ist dabei über Lagerelemente L4 am Gehäuse G1 und über Lagerelemente L5 am Teilgehäuse G2 drehbar gelagert. Weiterhin stützt sich der Lamellenträger der Lamellenkupplung 4 über das erste Gangrad Z4 und das Lagerelement L3 am Gehäuse G1 ab, da der Lamellenträger drehfest mit dem ersten Gangrad Z4 verbunden ist.

Die Differentialsperre 14 wird normalerweise nur dann in den Sperrzustand geschaltet, wenn ein Rad des Fahrzeugs durchdreht oder kurz davor ist, also bei beginnendem Schlupf. Auch dies kann grundsätzlich manuell und/oder automatisch erfolgen. Hierzu können am Verteilergetriebe 10 einer oder mehrere Drehzahlsensoren S1, S2 und S3 vorgesehen sein, die mit einer Steuereinrichtung (nicht gezeigt) des Kraftfahrzeugs verbunden sind und die Drehzahl ihrer jeweils zugeordneten Welle W1, W3 und/oder W5 messen. Der Drehzahlsensor S2 kann hierzu am oder im Teilgehäuse G2 im Bereich der ersten Achswelle W3 angeordnet sein, während die Drehzahlsensoren S1 und/oder S3 an oder im Gehäuse G1 im Bereich der zweiten Achswelle W5 bzw. der Eingangswelle W1 angeordnet sein können. Überschreitet die Differenz zweier Drehzahlwerte eine gewisse Schwelle, kann die Differentialsperre 14 automatisch gesperrt werden.

Weiterhin umfasst das Verteilergetriebe 10 eine Schalteinrichtung 16, mittels welcher entweder das erste Gangrad Z4 oder das zweite Gangrad Z6 mit einem Zahnrad Z8 der Hohlwelle W4 drehbewegungsverbindbar ist. Das jeweils andere Gangrad Z4 oder Z6 wird jeweils von der Hohlwelle W4 drehbewegungsentkoppelt.

Man erkennt, dass die Lamellenkupplung 4 nicht unmittelbar die Sonne Z7 mit dem Steg des Planetenträgers 2 verbindet. Vielmehr wird die erste Achswelle W3 mit dem ersten Gangrad Z4 verbunden. Nur wenn dieses Gangrad Z4 dann wiederum über die Schalteinrichtung 16 mit dem Zahnrad Z8 der Hohlwelle verbunden wird, also wenn der erste Gang eingelegt ist, besteht auch eine Verbindung zwischen dem Sonnenrad Z7 und dem Steg des Planetenträgers 2.

Die gezeigte Differentialsperre 14 funktioniert somit nur im ersten Gang. Im zweiten Gang muss sie zum Fahren gelöst werden. Verbleibt die Differentialsperre 14 im zweiten Gang dennoch (versehentlich) geschlossen, so bleibt das Fahrzeug stehen, weil dann die Gangräder des ersten Gangs Z4 und des zweiten Gangs Z6 fest miteinander verbunden werden. In dieser Situation sind quasi erster und zweiter Gang gleichzeitig eingelegt. Dies sorgt auch ohne weiteren Steuerungsaufwand einer Fahrzeugsteuerung dafür, dass schädliche Verspannungen, beispielsweise durch schnelle Straßenfahrt, mit geschlossener Differentialsperre 14 vermieden werden. Umgekehrt kann eine Feststellbremse des zugeordneten Kraftfahrzeugs durch gezieltes Einlegen des zweiten Gangs bei gleichzeitigem Sperren der Differentialsperre 14 unterstützt werden.

## Patentansprüche

1. Verteilergetriebe (10) zum Aufteilen eines Drehmoments auf wenigstens eine erste und eine zweite Achswelle (W3, W5) eines Kraftfahrzeugs, insbesondere einer selbstfahrenden Arbeitsmaschine, wobei das Verteilergetriebe (10) zumindest Folgendes umfasst:
- eine Eingangswelle (W1), welche mit einem Motor, insbesondere einem Hydromotor, des Kraftfahrzeugs koppelbar ist;
- mindestens ein erstes Gangrad (Z4), das zum Übertragen eines Drehmoments mit der Eingangswelle (W1) drehbewegungsverbunden ist;
- zumindest ein weiteres Gangrad (Z6), das zum Übertragen eines Drehmoments mit der Eingangswelle (W1) drehbewegungsverbunden ist;
- eine Hohlwelle (W4), durch welche die erste Achswelle (W3) hindurch geführt ist;
- ein Differentialgetriebe (12), mittels welchem ein Drehmoment zwischen der ersten Achswelle (W3), der Hohlwelle (W4) und der zweiten Achswelle (W5) aufteilbar ist;
- eine Differentialsperre (14), welche zwischen einem Sperrzustand, in dem mindestens das erste Gangrad (Z4) mit der ersten Achswelle (W3) drehbewegungsverbunden ist, und einem Offenzustand, in dem mindestens das erste Gangrad (Z4) von der ersten Achswelle (W3) drehbewegungsentkoppelt ist, schaltbar ist; und
- eine Schalteinrichtung (16), mittels welcher in einem ersten Gang das erste Gangrad (Z4) mit der Hohlwelle (W4) drehbewegungsverbindbar und das zumindest eine weitere Gangrad (Z6) von der Hohlwelle (W4) drehbewegungsentkoppelbar ist und mittels welcher in einem zweiten Gang das erste Gangrad (Z4) von der Hohlwelle (W4) drehbewegungsentkoppelbar und das zumindest eine weitere Gangrad (Z6) mit der Hohlwelle (W4) drehbewegungsverbindbar ist.

2. Verteilergetriebe (10) nach Anspruch 1,
**dadurch gekennzeichnet, dass**
das erste Gangrad (Z4) und/oder das wenigstens eine weitere Gangrad (Z6) zum Übertragen eines Drehmoments über wenigstens eine Zwischenwelle (W2) mit der Eingangswelle (W1) drehbewegungsverbunden ist.

3. Verteilergetriebe (10) nach Anspruch 1 oder 2,
**dadurch gekennzeichnet, dass**
die erste Achswelle (W3), die zweite Achswelle (W5) und die Hohlwelle (W4) koaxial angeordnet sind.

4. Verteilergetriebe (10) nach einem der Ansprüche 1 bis 3,
**dadurch gekennzeichnet, dass**
das Differentialgetriebe (12) als Planetendifferenzial ausgebildet ist.

5. Verteilergetriebe (10) nach Anspruch 4,
**dadurch gekennzeichnet, dass**
die erste Achswelle (W3) mit einem Sonnenrad (Z7), die Hohlwelle (W4) mit Planeten (3) und die zweite Achswelle (W5) mit einem Hohlrad (1) des Differentialgetriebes (12) drehbewegungsverbunden sind.

6. Verteilergetriebe (10) nach Anspruch 4 oder 5,
**dadurch gekennzeichnet, dass**
die Hohlwelle (W4) einenends über wenigstens einen Steg eines Planetenträgers (2) der Planeten (3) des Planetendifferenzials (12) an einem Gehäuse (G1) des Verteilergetriebes (10) gelagert ist.

7. Verteilergetriebe (10) nach einem der Ansprüche 1 bis 6,
**dadurch gekennzeichnet, dass**
die Hohlwelle (W4) anderenends über das erste Gangrad (Z4) am Gehäuse (G1) des Verteilergetriebes (10) gelagert ist.

8. Verteilergetriebe (10) nach einem der Ansprüche 1 bis 7,
**dadurch gekennzeichnet, dass**
die Differentialsperre (14) eine Lamellenkupplung (4) umfasst, welche im Sperrzustand das erste Gangrad (Z4) mit der ersten Achswelle (W3) drehbewegungsverbindet und im Offenzustand das erste Gangrad (Z4) von der ersten Achswelle (W3) drehbewegungsentkoppelt.

9. Verteilergetriebe (10) nach einem der Ansprüche 1 bis 8,
**dadurch gekennzeichnet, dass**
die Differentialsperre (14) in einem Teilgehäuse (G2) angeordnet ist, wobei das Teilgehäuse (G2) vorzugsweise lösbar mit dem Gehäuse (G1) des Verteilergetriebes (10) verbunden ist.

10. Verteilergetriebe (10) nach Anspruch 8 oder Anspruch 8 und 9,
**dadurch gekennzeichnet, dass**
ein Lamellenträger der Lamellenkupplung (4) vermittels wenigstens eines Lagerelements (L3, L4, L5) am Gehäuse (G1) des Verteilergetriebes (10) und/oder am Teilgehäuse (G2) der Differentialsperre (14) drehbar gelagert und/oder am ersten Gangrad (Z4) abgestützt ist.

11. Verteilergetriebe (10) nach einem der Ansprüche 1 bis 10,
**dadurch gekennzeichnet, dass**
wenigstens ein Drehzahlsensor (S1, S2, S3) vorgesehen ist, mittels welchem eine Drehzahl der ersten Achswelle (W3) und/oder der zweiten Achswelle (W5) und/oder der Eingangswelle (W1) ermittelbar ist.

12. Verteilergetriebe (10) nach einem der Ansprüche 1 bis 11,
**dadurch gekennzeichnet, dass**
eine Steuereinrichtung vorgesehen ist, mittels welcher die Differentialsperre (14) in Abhängigkeit eines Fahrzustands des zugeordneten Kraftfahrzeugs schaltbar ist.

13. Kraftfahrzeug, insbesondere selbstfahrende Arbeitmaschine, mit wenigstens einer ersten und einer zweiten Achswelle (W3, W5),
**dadurch gekennzeichnet, dass**
dieses wenigstens ein Verteilergetriebe (10) nach einem der Ansprüche 1 bis 12 zum Aufteilen eines Drehmoments auf die erste und die zweite Achswelle (W3, W5) umfasst.

## Claims

1. A transfer gearbox (10) for dividing a torque to at least a first and a second axle shaft (W3, W5) of a motor vehicle, in particular of an automotive working machine, wherein the transfer gearbox (10) includes at least the following:
- an input shaft (W1), which can be coupled to a motor, in particular a hydraulic motor, of the motor vehicle;
- at least one first gear wheel (Z4) connected to the input shaft (W1) in terms of rotary motion for transmitting a torque;
- at least one further gear wheel (Z6) connected to the input shaft (W1) in terms of rotary motion for transmitting a torque;
- a hollow shaft (W4), through which the first axle shaft (W3) is passed;
- a differential gear (12), by means of which a torque is dividable between the first axle shaft (W3), the hollow shaft (W4) and the second axle shaft (W5);
- a differential lock (14), which is shiftable between a locked state, in which at least the first gear wheel (Z4) is connected to the first axle shaft (W3) in terms of rotary motion, and an open state, in which at least the first gear wheel (Z4) is decoupled from the first axle shaft (W3) in terms of rotary motion; and
- a shifting device (16), by means of which the first gear wheel (Z4) can be connected to the hollow shaft (W4) in terms of rotary motion and the at least one further gear wheel (Z6) can be decoupled from the hollow shaft (W4) in terms of rotary motion in a first gear, and by means of which the first gear wheel (Z4) can be decoupled from the hollow shaft (W4) in terms of rotary motion and the at least one further gear wheel (Z6) can be coupled to the hollow shaft (W4) in terms of rotary motion in a second gear.

2. The transfer gearbox (10) according to claim 1,
**characterized in that**
the first gear wheel (Z4) and/or the at least one further gear wheel (Z6) are connected to the input shaft (W1) in terms of rotary motion via at least one intermediate shaft (W2) for transmitting a torque.

3. The transfer gearbox (10) according to claim 1 or 2,
**characterized in that**
the first axle shaft (W3), the second axle shaft (W5) and the hollow shaft (W4) are coaxially arranged.

4. The transfer gearbox (10) according to any one of claims 1 to 3,
**characterized in that**
the differential gear (12) is formed as a planetary differential.

5. The transfer gearbox (10) according to claim 4,
**characterized in that**
the first axle shaft (W3) is connected to a sun wheel (Z7), the hollow shaft (W4) is connected to planetary wheels (3) and the second axle shaft (W5) is connected to a gear ring (1) of the differential gear (12) in terms of rotary motion.

6. The transfer gearbox (10) according to claim 4 or 5,
**characterized in that**
the hollow shaft (W4) is supported on a housing (G1) of the transfer gearbox (10) via at least one web of a planetary carrier (2) of the planetary wheels (3) of the planetary differential (12) at one end.

7. The transfer gearbox (10) according to any one of claims 1 to 6,
**characterized in that**
the hollow shaft (W4) is supported on the housing (G1) of the transfer gearbox (10) via the first gear wheel (Z4) at the other end.

8. The transfer gearbox (10) according to any one of claims 1 to 7,
**characterized in that**
the differential lock (14) includes a multi-disc clutch (4), which connects the first gear wheel (Z4) to the first axle shaft (W3) in terms of rotary motion in the locked state and decouples the first gear wheel (Z4) from the first axle shaft (W3) in terms of rotary motion in the open state.

9. The transfer gearbox (10) according to any one of claims 1 to 8,
**characterized in that**
the differential lock (14) is arranged in a partial housing (G2), wherein the partial housing (G2) is preferably detachably connected to the housing (G1) of the transfer gearbox (10).

10. The transfer gearbox (10) according to claim 8 or claim 8 and 9,
**characterized in that**
a disc carrier of the multi-disc clutch (4) is rotatably supported on the housing (G1) of the transfer gearbox (10) by means of at least one bearing element (L3, L4, L5) and/or on the partial housing (G2) of the differential lock (14) and/or is supported on the first gear wheel (Z4).

11. The transfer gearbox (10) according to any one of claims 1 to 10,
**characterized in that**
at least one rotational speed sensor (S1, S2, S3) is provided, by means of which a rotational speed of the first axle shaft (W3) and/or of the second axle shaft (W5) and/or of the input shaft (W1) can be ascertained.

12. The transfer gearbox (10) according to any one of claims 1 to 11,
**characterized in that**
a control device is provided, by means of which the differential lock (14) is shiftable depending on a driving condition of the associated motor vehicle.

13. A motor vehicle, in particular automotive working machine, including at least a first and a second axle shaft (W3, W5),
**characterized in that**
it includes at least one transfer gearbox (10) according to any one of claims 1 to 12 for dividing a torque to the first and the second axle shaft (W3, W5).

## Revendications

1. Boîte de transfert (10), destinée à répartir un couple sur au moins un premier et un second corps d'essieu (W3, W5) d'un véhicule, en particulier d'un engin automoteur, la boîte de transfert (10) comprenant au moins ce qui suit :
- un arbre d'entrée (W1), qui peut être couplé à un moteur, en particulier un moteur hydraulique, du véhicule ;
- au moins un premier pignon de rapport (Z4), qui est relié à l'arbre d'entrée (W1) pour l'exécution d'un mouvement de rotation, en vue de la transmission d'un couple ;
- au moins un autre pignon de rapport (Z6), qui est relié à l'arbre d'entrée (W1) pour l'exécution d'un mouvement de rotation, en vue de la transmission d'un couple ;
- un arbre creux (W4), à travers lequel est guidé le premier corps d'essieu (W3) ;
- un engrenage différentiel (12), au moyen duquel un couple peut être réparti entre le premier corps d'essieu (W3), l'arbre creux (W4) et le second corps d'essieu (W5) ;
- un blocage de différentiel (14), lequel peut être accouplé entre un état de blocage, dans lequel au moins le premier pignon de rapport (Z4) est relié au premier corps d'essieu (W3), pour l'exécution d'un mouvement de rotation et un état ouvert, dans lequel au moins le premier pignon de rapport (Z4) est découplé du premier corps d'essieu (W3) pour l'exécution d'un mouvement de rotation et
- un dispositif de commande (16), au moyen duquel le premier pignon de rapport (Z4) peut être relié à l'arbre creux (W4), pour l'exécution d'un mouvement de rotation, dans une première vitesse et le au moins un autre pignon de rapport (Z6) peut être découplé de l'arbre creux (W4), pour l'exécution d'un mouvement de rotation et au moyen duquel le premier pignon de rapport (Z4) peut être découplé de l'arbre creux (W4), pour l'exécution d'un mouvement de rotation, dans une seconde vitesse et le au moins un autre pignon de rapport (Z6) peut être relié à l'arbre creux (W4), pour l'exécution d'un mouvement de rotation.

2. Boîte de transfert (10) selon la revendication 1,
**caractérisée en ce que**
le premier pignon de rapport (Z4) et / ou le au moins un autre pignon de rapport (Z6) sont reliés à l'arbre d'entrée (W1), pour l'exécution d'un mouvement de rotation, en vue de la transmission d'un couple, par l'intermédiaire d'au moins un arbre intermédiaire (W2).

3. Boîte de transfert (10) selon la revendication 1 ou 2,
**caractérisée en ce que**
le premier corps d'essieu (W3), le second corps d'essieu (W5) et l'arbre creux (W4) sont agencés de manière coaxiale.

4. Boîte de transfert (10) selon l'une des revendications 1 à 3,
**caractérisée en ce que**
l'engrenage différentiel (12) est constitué comme différentiel planétaire.

5. Boîte de transfert (10) selon la revendication 4,
**caractérisée en ce que**
le premier corps d'essieu (W3) est relié à un pignon solaire (Z7), pour l'exécution d'un mouvement de rotation, l'arbre creux (W4) à des planètes (3) et le second corps d'essieu (W5) à une couronne (1) de l'engrenage différentiel (12).

6. Boîte de transfert (10) selon la revendication 4 ou 5,
**caractérisée en ce que**
l'arbre creux (W4) est installé à une extrémité, par l'intermédiaire au moins d'une traverse d'un support planétaire (2) des planètes (3) du différentiel planétaire (12), sur un boîtier (G1) de la boîte de transfert (10).

7. Boîte de transfert (10) selon l'une des revendications 1 à 6,
**caractérisée en ce que**
l'arbre creux (W4) est installé à l'autre extrémité, par l'intermédiaire du premier pignon de rapport (Z4), sur le boîtier (G1) de la boîte de transfert (10).

8. Boîte de transfert (10) selon l'une des revendications 1 à 7,
**caractérisée en ce que**
le blocage de différentiel (14) comprend un embrayage à disque (4), lequel relie, à l'état de blocage, le premier pignon de rapport (Z4) au premier corps d'essieu (W3), pour l'exécution d'un mouvement de rotation et découple, à l'état ouvert, le premier pignon de rapport (Z4) du premier corps d'essieu (W3), pour l'exécution d'un mouvement de rotation.

9. Boîte de transfert (10) selon l'une des revendications 1 à 8,
**caractérisée en ce que**
le blocage de différentiel (14) est agencé dans un boîtier partiel (G2), le boîtier partiel (G2) étant relié, de préférence de manière amovible, au boîtier (G1) de la boîte de transfert (10).

10. Boîte de transfert (10) selon la revendication 8 ou la revendication 8 et 9,
**caractérisée en ce**
**qu'**un porte-disques de l'embrayage à disque (4) est installé à rotation, par l'entremise au moins d'un élément formant support (L3, L4, L5), sur le boîtier (G1) de la boîte de transfert (10) et / ou sur le boîtier partiel (G2) du blocage de différentiel (14) et / ou s'appuie sur le premier pignon de rapport (Z4).

11. Boîte de transfert (10) selon l'une des revendications 1 à 10,
**caractérisée en ce**
**qu'**au moins un capteur de vitesse de rotation (S1, S2, S3) est prévu, au moyen duquel une vitesse de rotation du premier corps d'essieu (W3) et / ou du second corps d'essieu (W5) et / ou de l'arbre d'entrée (W1) peut être déterminée.

12. Boîte de transfert (10) selon l'une des revendications 1 à 11,
**caractérisée en ce**
**qu'**un dispositif de commande est prévu, au moyen duquel le blocage de différentiel (14) peut être accouplé en fonction d'un état de conduite du véhicule affecté.

13. Véhicule, en particulier engin automoteur, avec au moins un premier et un second corps d'essieu (W3, W5),
**caractérisé en ce que**
celui-ci comprend au moins une boîte de transfert (10) selon l'une des revendications 1 à 12, destinée à répartir un couple sur le premier et le second corps d'essieu (W3, W5).
